# EUROPÄISCHE PATENTANMELDUNG

(11) **EP 4 427 579 A1**
(43) Veröffentlichungstag der Anmeldung: **11.09.2024**
(21) Anmeldenummer: 23217014.2
(22) Anmeldetag: 15.12.2023
(51) Int. Cl.: A01F 29/06, A01F 29/22

(54) **SCHLEIFVORRICHTUNG FÜR HÄCKSELMESSER EINES HÄCKSELWERKS, HÄCKSELWERK UND VERFAHREN ZUM SCHLEIFEN DER HÄCKSELMESSER EINES HÄCKSELWERKS**

(30) Priorität: 07.03.2023 DE 102023105606
(71) Anmelder: CLAAS Saulgau GmbH, 88348 Bad Saulgau (DE)
(72) Erfinder: Kloker, Philipp, 88499 Emeringen (DE); Fischer, Josef, 88400 Biberach (DE)
(74) Vertreter: Budach, Steffen

(57) **Zusammenfassung**

Schleifvorrichtung (3) für Häckselmesser (7) eines Häckselwerks (1) einer landwirtschaftlichen Erntemaschine, mit einem Schleifschlitten (10), der entlang einer gehäusefesten Führung (9) parallel zu einer Drehachse (6) einer die Häckselmesser (7) tragenden Häckseltrommel (2) des Häckselwerks (1), die an einem Gehäuse des Häckselwerks (1) drehbar gelagert ist, in Axialrichtung der Häckseltrommel (2) verlagerbar ist, mit einer an dem Schleifschlitten (10) montierten, einen Schleifstein (11) aufweisenden Schleifsteinbaugruppe (12), die zusammen mit dem Schleifschlitten (10) parallel zu der Drehachse (6) der Häckseltrommel (2) in Axialrichtung derselben verlagerbar ist, wobei der Schleifstein (11) um eine Drehachse (13) des Schleifsteins (11), die sich vorzugsweise parallel zu der Drehachse (6) der Häckseltrommel (2) und damit in Axialrichtung der Häckseltrommel (2) erstreckt, rotatorisch antreibbar ist, und in Radialrichtung der Häckseltrommel (2) derart an die Häckselmesser (7) anstellbar ist, dass in Drehrichtung der Häckseltrommel gesehen den Schneidkanten der Häckselmesser nachgeordnete Freiflächen anschleifbar sind, die sich radial nach innen erstrecken. Fig. 2

## Beschreibung

Die Erfindung betrifft eine Schleifvorrichtung für Häckselmesser eines Häckselwerks, ein Häckselwerk und ein Verfahren zum Schleifen der Häckselmesser.

DE 41 28 483 C2 offenbart eine Schleifvorrichtung für Häckselmesser eines Häckselwerks einer landwirtschaftlichen Erntemaschine. Die Schleifvorrichtung verfügt über einen Schleifschlitten, der entlang einer gehäusefesten Führung parallel zu einer Drehachse einer die Häckselmesser tragenden Häckseltrommel des Häckselwerks, die an einem Gehäuse des Häckselwerks drehbar gelagert ist, verlagerbar ist. An dem Schleifschlitten der Schleifvorrichtung ist ein Schleifstein montiert. Der Schleifstein ist über eine ebenfalls am Schleifschlitten der Schleifvorrichtung montierte Spindel sowie über ein ebenfalls am Schleifschlitten montiertes und mit der Spindel zusammenwirkendes Klinkenrad radial zur Drehachse der Häckseltrommel an die Häckselmesser der Häckseltrommel anstellbar, und zwar im Zusammenspiel mit an der Gehäusewand des Gehäuses des Häckselwerks montierten Anschlägen, die mit dem am Schleifschlitten montierten Klinkenrad zusammenwirken. Dann, wenn sich der Schleifschlitten bei seiner Bewegung entlang der gehäusefesten Führung parallel zur Drehachse der Häckseltrommel in Richtung auf einen gehäusefesten Anschlag bewegt, kommt ein derartiger Anschlag in Eingriff mit dem Klinkenrad, wodurch das Klinkenrad und damit die mit dem Klinkenrad zusammenwirkende Spindel verdreht wird. Die Drehbewegung des Klinkenrads und der Spindel wird von der Spindel in eine Linearbewegung des Schleifsteins in Radialrichtung der Häckseltrommel umgesetzt, um so den Schleifstein radial zur Drehachse der Häckseltrommel an die Häckselmesser anzustellen.

DE 10 2016 101 834 A1 offenbart eine weitere Schleifvorrichtung für Häckselmesser eines Häckselwerks, bei welcher die Drehbewegung eines Klinkenrads in eine translatorische Verstellbewegung eines Schleifsteins umgesetzt wird, um den Schleifstein an Häckselmesser eines Häckselwerks anzustellen.

DE 10 2016 101 836 A1 offenbart ebenfalls eine Schleifvorrichtung für Häckselmesser eines Häckselwerks, wobei der Schleifstein in einer Schleifsteinbuchse aufgenommen ist. Die Einheit aus Schleifstein und Schleifsteinbuchse ist am Schleifschlitten der Schleifvorrichtung montiert, der entlang einer gehäusefesten Führung parallel zur Drehachse der die Häckselmesser tragenden Häckseltrommel verlagerbar ist.

Um beim Schleifen der Häckselmesser an denselben scharfe Schneidkanten auszubilden, wird über den Schleifstein der Schleifvorrichtung an den Häckselmessern in radialer Richtung Material abgetragen. Die Häckselmesser sind dabei im Längsschnitt derselben typischerweise konisch konturiert, wobei dann, wenn an denselben in Radialrichtung außen Material abgetragen wird, sich eine sogenannte Facettenlänge einer die Schneidkante aufweisenden Facettenfläche der Häckselmesser vergrößert.

Beim Häckseln wird das Erntegut entlang der Facettenfläche der Häckselmesser bewegt, wobei mit zunehmender Facettenlänge der Facettenfläche der Häckselmesser die Verlustleistung des Häckselwerks steigt. Auch nimmt mit zunehmender Facettenlänge der Facettenfläche der Häckselmesser die Gefahr von Stopfern, also die Gefahr eines gestörten Gutflusses im Häckselwerk der landwirtschaftlichen Erntemaschine zu. Darüber hinaus nimmt bei zunehmender Facettenlänge bzw. Facettenfläche die Reibung zu, was zur Erhöhung der Temperatur an den Messern sowie am Erntegut führen kann und damit die Brandgefahr erhöht.

Es besteht Bedarf an einer Schleifvorrichtung für die Häckselmesser eines Häckselwerks, mit welcher einer sich vergrößernden Facettenlänge beim Schleifen der Häckselmesser entgegengewirkt werden kann, um die Effizienz des Häckselwerks zu steigern und der Gefahr von Stopfern entgegenzuwirken.

Hiervon ausgehend liegt der vorliegenden Erfindung die Aufgabe zugrunde, eine neuartige Schleifvorrichtung für Häckselmesser eines Häckselwerks, ein Häckselwerk einer landwirtschaftlichen Erntemaschine mit einer solchen Schleifvorrichtung und ein Verfahren zum Schleifen der Häckselmesser eines Häckselwerks zu schaffen.

Diese Aufgabe wird durch eine Schleifvorrichtung für Häckselmesser eines Häckselwerks nach Anspruch 1 gelöst.

Erfindungsgemäß ist der Schleifstein um eine Drehachse des Schleifsteins, die sich vorzugsweise parallel zu der Drehachse der Häckseltrommel und damit in Axialrichtung der Häckseltrommel erstreckt, rotatorisch antreibbar. Der Schleifstein bildet demnach eine Schleifscheibe aus und kann somit auch als Schleifscheibe bezeichnet werden.

Der Schleifstein ist erfindungsgemäß in Radialrichtung der Häckseltrommel an die Häckselmesser derart anstellbar, dass in Drehrichtung der Häckseltrommel gesehen den Schneidkanten der Häckselmesser nachgeordnete Freiflächen anschleifbar sind, die sich radial nach innen erstrecken.

Mit der vorliegenden Schleifvorrichtung ist es möglich, Freiflächen an die Häckselmesser zu schleifen, welche die sogenannte Facettenlänge reduzieren. Hierdurch ist es möglich, der Gefahr von Stopfern entgegenzuwirken und die Verlustleistung eines Häckselwerks zu reduzieren und so letztendlich die Effizienz desselben zu steigern.

Durch die reduzierte Facettenlänge und durch die Freifläche wird die Reibung vorteilhaft vermindert, wodurch auch eine zu große Temperaturerhöhung vermieden wird und die Brandgefahr verringert.

Die jeweilige Freifläche an dem jeweiligen Häckselmesser kann derart ausgebildet werden, dass eine die Schneidkante aufweisende Facettenfläche des jeweiligen Häckselmessers eine definierte Höhe oder Länge aufweist und die jeweilige sich an die Facettenfläche anschließende Freifläche relativ zur jeweiligen Facettenfläche mit einem definierten Freiflächenwinkel nach radial innen in die Häckseltrommel hinein geneigt ist.

Vorzugsweise weist die Schleifvorrichtung einen ersten Aktuator zur translatorischen Verlagerung des Schleifschlittens zusammen mit der Schleifsteinbaugruppe entlang der gehäusefesten Führung in Axialrichtung der Häckseltrommel, einen zweiten Aktuator zum rotatorischen Antreiben des Schleifsteins um seine Drehachse und einen dritten Aktuator zum translatorischen Anstellen des Schleifsteins an die Häckselmesser in Radialrichtung der Häckseltrommel auf. Die drei Aktuatoren erlauben eine besonders vorteilhafte Bearbeitung der Schneidkanten sowie Freiflächen der Häckselmesser.

Mit der erfindungsgemäßen Schleifvorrichtung ist es auch möglich, Schneidkanten an die Häckselmesser anzuschleifen bzw. bereits vorhandene Schneidkanten nach zu schärfen.

Vorzugsweise weist die Schleifvorrichtung ein Steuergerät auf. Das Steuergerät der Schleifvorrichtung ist eingerichtet, um zum Schleifen der Schneidkanten der Häckselmesser den dritten Aktuator zur Einstellung der ersten radialen Relativposition zwischen der Häckseltrommel und dem Schleifstein anzusteuern, den zweiten Aktuator zum rotatorischen Antreiben des Schleifsteins anzusteuern, den ersten Aktuator zur Verlagerung des Schleifschlittens entlang der gehäusefesten Führung anzusteuern, und einen Antrieb der Häckseltrommel zum rotatorischen Antreiben des Schleifsteins in einer ersten Drehrichtung anzusteuern. Das Steuergerät der Schleifvorrichtung ist ferner eingerichtet, um zum Schleifen der Freiflächen der Häckselmesser den dritten Aktuator zur Einstellung der zweiten radialen Relativposition zwischen der Häckseltrommel und dem Schleifstein anzusteuern, den zweiten Aktuator zum rotatorischen Antreiben des Schleifsteins anzusteuern, den ersten Aktuator zur Verlagerung des Schleifschlittens entlang der gehäusefesten Führung anzusteuern, und den Antrieb der Häckseltrommel in einer entgegengesetzt zur ersten Drehrichtung verlaufenden zweiten Drehrichtung abhängig von einem bekannten Anstellwinkel der Häckselmesser gegenüber der Axialrichtung der Häckseltrommel derart anzusteuern, dass das jeweilige Häckselmesser mit der Außenseite gegen den Schleifstein gedrückt wird. Das Steuergerät erlaubt eine besonders vorteilhafte Bearbeitung der Schneidkanten sowie Freiflächen der Häckselmesser.

Vorzugsweise wird die jeweilige Freifläche an dem jeweiligen Häckselmesser derart ausgebildet, dass eine die Schneidkante des jeweiligen Häckselmessers aufweisende Facettenfläche des jeweiligen Häckselmessers eine definierte Höhe oder Länge aufweist und die jeweilige sich an die Facettenfläche anschließende Freifläche relativ zur jeweiligen Facettenfläche mit einem definierten Freiflächenwinkel nach radial innen in die Häckseltrommel hinein geneigt ist. Der definierte Freiflächenwinkel beträgt zwischen 6° und 10°. Eine derartige Freifläche ist besonders bevorzugt, um der Ausbildung von Stopfern entgegenzuwirken und die Verlustleistung des Häckselwerks zu begrenzen und damit letztendlich die Effizienz des Häckselwerks zu steigern.

Die Schleifvorrichtung ist vorzugsweise dazu eingerichtet, die Messer auch nur partiell bearbeiten zu können. Somit kann beispielsweise ein definierter Bereich der Messer oder ein Teil der Messer nicht mit einer Freifläche versehen werden, um beispielsweise die Einstellung der Gegenschneide zu erleichtern.

Ein erfindungsgemäßes Häckselwerk einer landwirtschaftlichen Erntemaschine, insbesondere eines Feldhäckslers, mit einer Schleifvorrichtung ist in Anspruch 7 definiert.

Das Verfahren zum Schleifen der Häckselmesser eines Häckselwerks ist in Anspruch 8 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Draufsicht auf eine Häckseltrommel zusammen mit einer erfindungsgemäßen Schleifvorrichtung in radialer Blickrichtung;
- Fig. 2: eine Seitenansicht der Fig. 1 in axialer Blickrichtung;
- Fig. 3a-3c: eine Abfolge von Verfahrensschritten zur Verdeutlichung des erfindungsgemäßen Verfahrens; und
- Fig. 4: ein Detail eines Häckselmessers der Häckseltrommel zusammen mit einer Gegenschneide.

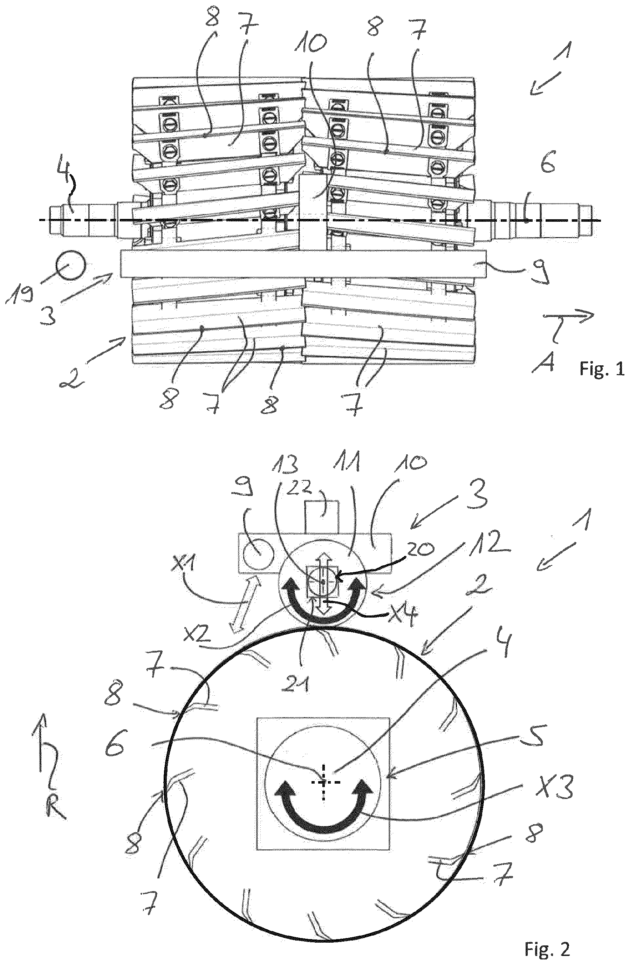

Fig. 1 zeigt einen Ausschnitt aus einem Häckselwerk 1 einer landwirtschaftlichen Erntemaschine, insbesondere eines Feldhäckslers, im Bereich einer Häckseltrommel 2 sowie im Bereich einer Schleifvorrichtung 3.

Die Häckseltrommel 2 verfügt über eine Welle 4, über welche die Häckseltrommel 2 in einem nicht gezeigten Gehäuse des Häckselwerks 1 drehbar gelagert ist. Über einen mit der Welle 4 wirkverbundenen Antrieb 5 (Fig. 2) kann die Häckseltrommel 2 um eine Drehachse 6 drehend angetrieben werden. Die Drehachse 6 der Häckseltrommel 1 erstreckt sich in Axialrichtung A der Häckseltrommel 2.

Die Häckseltrommel 2 trägt Häckselmesser 7, wobei über den Umfang der Häckseltrommel 2 mehrere Häckselmesser 7 mit Abstand zueinander angeordnet sind. In Fig. 1 sind auch an jeder Umfangsposition, an welcher Häckselmesser montiert sind, in Axialrichtung jeweils zwei Häckselmesser 7 nebeneinander angeordnet.

Die Häckselmesser 7 weisen Schneidkanten 8 auf, die im Häckselbetrieb des Häckselwerks 1 in Drehrichtung der Häckseltrommel 2 gesehen nach vorne gerichtet sind.

Die Häckselmesser 7 und damit die Schneidkanten 8 sind gemäß Fig. 1 mit einem definierten Anstellwinkel gegenüber der Axialrichtung A schräggestellt. Dieser Anstellwinkel ist konstruktiv vorgegeben und bekannt.

Die Schleifvorrichtung 3 verfügt über einen Schleifschlitten 10. Der Schleifschlitten 10 ist entlang einer gehäusefesten Führung 9 parallel zur Drehachse 6 der die Häckselmesser 7 tragenden Häckseltrommel 2 und damit in Axialrichtung A der Häckseltrommel 2 translatorisch verlagerbar. Die translatorische Verlagerung des Schleifschlittens 10 entlang der Führung 9 in die Bildebene hinein bzw. aus der Bildebene heraus ist in Fig. 2 durch einen Doppelpfeil X1 visualisiert.

Der Schleifschlitten 10 trägt einen am Schleifschlitten 10 montierten Schleifstein 11 einer Schleifsteinbaugruppe 12. Die Schleifsteinbaugruppe 12 kann eine Schleifsteinaufnahme zur drehbaren Lagerung des Schleifsteins 11 aufweisen. Der Schleifstein 11 ist um eine Drehachse 13 desselben rotatorisch antreibbar. Die Drehachse 13 des Schleifsteins 11 erstreckt sich parallel zur Drehachse 6 der Häckseltrommel 2 und damit in Axialrichtung A derselben. Der Schleifstein 11 ist als Schleifscheibe ausgebildet. Der Schleifstein 11 kann auch als Schleifscheibe bezeichnet werden. Die Drehbarkeit des Schleifsteins 11 um seine Drehachse 13 ist in Fig. 2 durch einen Doppelpfeil X2 visualisiert.

Die Drehbarkeit der Häckseltrommel 2 um ihre Drehachse 6 ist in Fig. 2 durch einen Doppelpfeil X3 visualisiert.

Sowohl die Häckseltrommel 2 als auch der Schleifstein 11 sind demnach um ihre jeweiligen Drehachsen 6, 13 drehend bzw. rotatorisch antreibbar. Diese Drehachsen 6, 13 erstrecken sich parallel zueinander in Axialrichtung A der Häckseltrommel. Der Schleifstein 11 der Schleifvorrichtung 13 ist über den Schleifschlitten 10 der Schleifvorrichtung 13 entlang der Führung 9 translatorisch verlagerbar, und zwar in Axialrichtung A der Häckseltrommel 2.

Der Schleifstein 11 ist zusätzlich in Radialrichtung R der Häckseltrommel 2 an die Häckselmesser 7 anstellbar. Diese translatorische Verlagerung des Schleifsteins 11 in Radialrichtung R ist in Fig. 2 durch einen Doppelpfeil X4 visualisiert.

Die Radialposition des Schleifsteins 11 relativ zur Häckseltrommel 2 ist derart einstellbar, dass in einer ersten radialen Relativposition zwischen der Häckseltrommel 2 und dem Schleifstein 11 an einer ersten Seite der Häckselmesser 7 die Schneidkanten 8 der Häckselmesser 7 schleifbar sind.

Ferner ist der Schleifstein 11 in Radialrichtung R der Häckseltrommel 2 derart an die Häckselmesser 7 anstellbar, dass in einer zweiten radialen Relativposition zwischen der Häckseltrommel 2 und dem Schleifstein 11 in Drehrichtung der Häckseltrommel 2 während des Erntebetriebs gesehen den Schneidkanten 8 der Häckselmesser 7 nachgeordnete Freiflächen 14 anschleifbar sind.

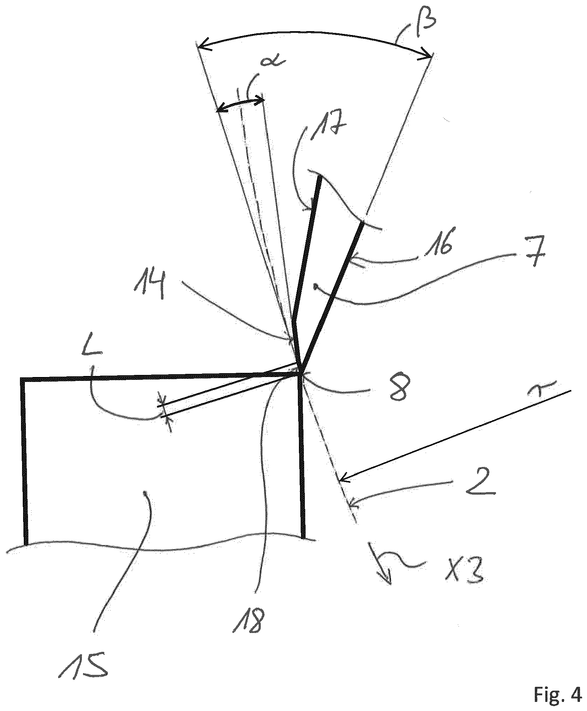

Fig. 4 zeigt einen Ausschnitt aus einem Häckselmesser 7 einer Häckseltrommel 2 zusammen mit einer feststehenden Gegenschneide 15 des Häckselwerks 1. Beim Häckseln wird die Häckseltrommel 2 in Richtung des Pfeils X3 der Fig. 4 in einer ersten Drehrichtung drehend angetrieben, wobei hierbei die Schneidkante 8 des Häckselmessers 7 unter Ausbildung eines Schneidspalts entlang der feststehenden Gegenschneide 15 entlangbewegt wird. Die Schneidkante 8 des Häckselmesser 7 ist dabei an einer ersten Seite 16 des Häckselmessers 7 ausgebildet. In der ersten Drehrichtung zeigen die Schneidkanten 8 der Häckselmesser 7 in der ersten Drehrichtung nach vorne.

An einer gegenüberliegenden zweiten Seite 17 des Häckselmessers 7 ist in Fig. 4 durch einen Schleifvorgang mithilfe der Schleifvorrichtung 3 eine jeweilige Freifläche 14 ausgebildet. Zwischen der jeweiligen Freifläche 14 und der Schneidkante 8 des Häckselmessers 7 erstreckt sich eine Facettenfläche 18. Die Freifläche 14 schließt sich in der ersten Drehrichtung hinten an die Facettenfläche 18 an. Die Facettenfläche 18 schließt mit der ersten Seite 16 des Schneidmessers 7 den Winkel β ein. Die Freifläche 14 des Häckselmessers 7 schließt mit der Facettenfläche 18 desselben den Winkel α ein. Dieser Winkel α wird als Freiflächenwinkel bezeichnet, wobei die Freifläche 14 um diesen Freiflächenwinkel α nach innen in die Häckseltrommel 2 hinein geneigt ist.

Fig. 4 zeigt weiterhin eine Höhe bzw. Länge L der Facettenfläche 18 und einen Radius r einer Einhüllenden der Häckseltrommel 2, auf welcher die Schneidkanten 8 der Häckselmesser 7 liegen. Die Höhe bzw. Länge L der Facettenfläche 18 wird als Facettenlänge bezeichnet. Die Freifläche 14 des Häckselmessers 7 ragt in Radialrichtung nicht gegenüber dieser Einhüllenden 2 vor, sondern ist vielmehr um den Winkel α gegenüber der Einhüllenden der Häckseltrommel 2 nach radial innen geneigt.

Zur Verlagerung des Schleifschlittens 10 zusammen mit der Schleifsteinbaugruppe 12 entlang der gehäusefesten Führung 9 in Axialrichtung A umfasst die Schleifvorrichtung 3 einen ersten Aktuator 19. Bei diesem ersten Aktuator 19 kann es sich zum Beispiel um einen elektrischen Linearantrieb handeln, welcher den Schleifschlitten 10 zusammen mit der Schleifsteinbaugruppe 12 entlang der Führung 9 translatorisch verlagert.

Zum rotatorischen Antreiben des Schleifsteins 11 um seine Drehachse 13 verfügt die Schleifvorrichtung 3 über einen zweiten Aktuator 20. Bei diesem zweiten Aktuator 20 kann es sich zum Beispiel um einen elektrischen Aktuator, wie zum Beispiel um einen Elektromotor handeln, um den Schleifstein 11 rotatorisch anzutreiben. Ferner verfügt die Schleifvorrichtung 3 über einen dritten Aktuator 21. Der dritte Aktuator 21 dient dem Anstellen des Schleifsteins 11 an die Häckselmesser 7 in Radialrichtung R der Häckseltrommel 2. Auch bei dem dritten Aktuator 21 handelt es sich vorzugsweise um einen elektrischen Aktuator. Der zweite Aktuator 20 und der dritte Aktuator 21 sind vorzugsweise zusammen mit dem Schleifschlitten 10 entlang der gehäusefesten Führung 9 linear verlagerbar.

Die Schleifvorrichtung 3 verfügt weiterhin über ein Steuergerät 22. Das Steuergerät 22 ist eingerichtet, um zum Schleifen der an der ersten Seite 16 der Häckselmesser 7 ausgebildeten Schneidkanten 8 den dritten Aktuator 21 zur Einstellung der ersten radialen Relativposition zwischen der Häckseltrommel 2 und dem Schleifstein 11 anzusteuern, den zweiten Aktuator 20 zum rotatorischen Antreiben des Schleifsteins 11 anzusteuern und den ersten Aktuator 19 zur Verlagerung des Schleifschlittens 10 entlang der gehäusefesten Führung 9 in Axialrichtung A anzusteuern.

Ferner ist das Steuergerät 22 eingerichtet, um zum Schleifen der an der ersten Seite 16 der Häckselmesser 7 ausgebildeten Schneidkanten 8 der Häckselmesser 7 den Antrieb 5 der Häckseltrommel 2 zum rotatorischen Antreiben der Häckseltrommel 2 in der ersten Drehrichtung anzusteuern, in welcher die zu schleifenden Schneidkanten 8 der Häckselmesser 7 in der ersten Drehrichtung nach vorne gerichtet sind.

Zum Schleifen der an der ersten Seite 16 der Häckselmesser 7 ausgebildeten Schneidkanten 8 der Häckselmesser 7 wird demnach die Häckseltrommel 2 in der ersten Drehrichtung mit in dieser ersten Drehrichtung nach vorne zeigenden Schneidkanten 8 der Häckselmesser 7 rotatorisch angetrieben. Ferner wird die erste radiale Relativposition zwischen der Häckseltrommel 2 und dem Schleifstein 11 eingestellt, der Schleifstein 11 wird rotatorisch angetrieben und der die erste radiale Relativposition einnehmende Schleifstein 11, der rotatorisch angetrieben wird, wird über den Schleifschlitten 10 entlang der gehäusefesten Führung 9 in Axialrichtung A der Häckseltrommel entlang der in der ersten Drehrichtung rotierenden Häckseltrommel 2 verlagert, wobei hierbei die Schneidkanten 8 geschliffen werden. Hierbei wird in Radialrichtung von den Schleifkanten 8 Material abgetragen, wodurch sich die Facettenlänge der keilförmig konturierten Häckselmesser 7 vergrößert.

Das Steuergerät 22 ist ferner eingerichtet, um zum Schleifen der an der zweiten Seite 17 der Häckselmesser 7 ausgebildeten oder auszubildenden Freiflächen 14 der Häckselmesser 7 den dritten Aktuator 21 zur Einstellung der zweiten radialen Relativposition zwischen der Häckseltrommel 2 und dem Schleifstein 11 anzusteuern, um ferner den zweiten Aktuator 20 zum rotatorischen Antreiben des Schleifsteins 11 anzusteuern, und um ferner den ersten Aktuator 19 zur Verlagerung des Schleifschlittens 10 entlang der gehäusefesten Führung 9 anzusteuern. Zum Schleifen der Freiflächen 14 steuert das Steuergerät 22 den Antrieb 5 der Häckseltrommel 2 abhängig von dem Anstellwinkel der Häckselmesser 7 bzw. der Schneidkanten 8 derselben gegenüber der Axialrichtung A der Häckseltrommel derart an, dass das jeweilige Häckselmesser 7 mit der zweiten Seite 17 - der in radialer Richtung gesehen äußeren Seite - gegen den Schleifstein 11 gedrückt wird.

Zum Schleifen der an der zweiten Seite 17 der Häckselmesser 7 auszubildenden oder ausgebildeten Freiflächen 14 der Häckselmesser 7 wird demnach die zweite radiale Relativposition zwischen der Häckseltrommel 2 und dem Schleifstein 11 eingestellt, der Schleifstein 11 der Schleifvorrichtung 3 wird rotatorisch um seine Drehachse 13 angetrieben und zusammen mit dem Schleifschlitten 10 entlang der gehäusefesten Führung 9 in Axialrichtung A der Häckseltrommel 2 verlagert. Hierbei wird die Häckseltrommel 2 des Häckselwerks 1 abhängig von dem Anstellwinkel der Häckselmesser 7 zur Axialrichtung A der Häckseltrommel 2, der steuerungsseitig bekannt ist, in einer zu der ersten Drehrichtung entgegengesetzten zweiten Drehrichtung der Häckseltrommel 7 um die Drehachse 6 derselben verdreht, und zwar derart, dass das jeweilige Häckselmesser 7 an jeder axialen Relativposition des Schleifsteins 11 relativ zur Häckseltrommel 2 und damit relativ zu dem jeweiligen Häckselmesser 7, dessen Freifläche 14 zu schleifen ist, mit seiner jeweiligen zweiten Seite 17 gegen den Schleifstein 11 gedrückt wird, um so an dem jeweiligen Häckselmesser 7 die jeweilige Freifläche 14 auszubilden.

Während also bei dem Schleifen der Schneidkanten 8 die Häckseltrommel 2 rotatorisch in der ersten Drehrichtung angetrieben wird und bei dieser Rotation der Häckseltrommel 2 der Schleifstein 11 ebenfalls rotatorisch angetrieben in Axialrichtung A entlang der Häckseltrommel 2 verlagert wird, um hierbei an allen Schneidmessern 7 die Schneidkanten 8 zu schleifen, wird an jedem Häckselmesser 7 die jeweilige Freifläche 14 individuell bearbeitet, nämlich derart, dass bei an sich stillstehender Häckseltrommel 2 der rotierende Schleifstein 11 entlang der zweiten Seite 17 des jeweiligen Häckselmessers 7 translatorisch verlagert wird. Lediglich abhängig vom Anstellwinkel der Häckselmesser 7 wird hierbei die Häckseltrommel 2 in der zur ersten Drehrichtung entgegengesetzten zweiten Drehrichtung verdreht, um das jeweilige Häckselmesser 7 mit seiner zweiten Seite 17 gegen den Schleifstein 11 zu drücken und so die Freifläche 14 auszubilden.

Beim Schleifen der Schneidkanten 8 der Häckselmesser 7 sowie beim Schleifen der Freiflächen 14 der Häckselmesser 7 kann der Schleifstein 11 um seine Drehachse 13 jeweils in der gleichen Drehrichtung oder auch in entgegengesetzten Drehrichtungen angetrieben werden.

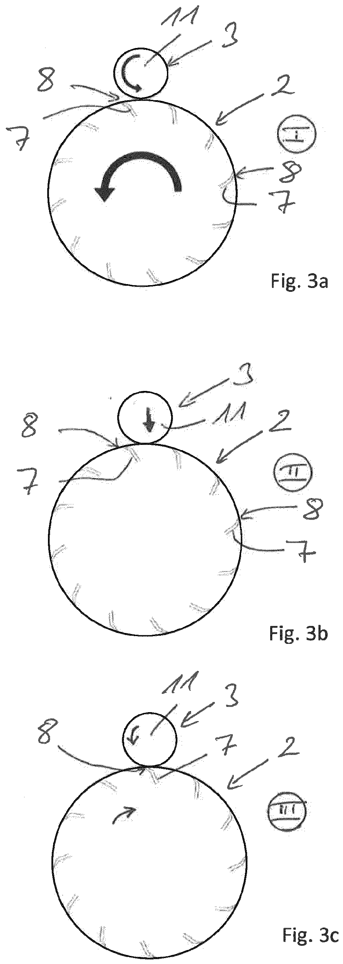

Fig. 3a, 3b und 3c zeigen schematisiert verschiedene Schritte I, II und III des erfindungsgemäßen Verfahrens, wobei im Schritt I das Schleifen der an der ersten Seite 16 der Häckselmesser 7 ausgebildeten Schneidkanten 8 erfolgt. Hierbei wird, wie bereits oben erwähnt, die Häckseltrommel 2 in der ersten Drehrichtung rotatorisch angetrieben, wobei ebenfalls der Schleifstein 11 rotatorisch angetrieben und in der ersten radialen Relativposition zur Häckseltrommel 2 entlang der Führung 9 translatorisch verlagert wird. In der ersten Relativposition zwischen der Häckseltrommel 2 und dem Schleifstein 11 berührt eine Umfangsfläche des Schleifsteins 11 eine Einhüllende der Häckseltrommel 2, auf welcher die Schneidkanten 8 der Häckselmesser 7 liegen, tangential. So kann, bei drehend angetriebener Häckseltrommel 2, von den Schneidkanten 8 sämtlicher Häckselmesser 7 Material zum Schleifen derselben abgetragen werden.

In einem nachfolgenden Schritt II wird nach Abschluss des Schleifens der Schneidkanten 8 die Häckseltrommel 2 gestoppt und nicht weiter rotatorisch angetrieben, wobei die Häckseltrommel 2 so positioniert wird, dass der Schleifstein 11 in die zweite Relativposition zur Häckseltrommel 2 verlagert werden kann, wobei in dieser zweiten radialen Relativposition zwischen der Häckseltrommel 2 und dem Schleifstein 11 die Umfangsfläche des Schleifsteins 11 die Einhüllende der Häckseltrommel 2, auf welcher die Schneidkanten 8 der Schneidmesser 7 liegen, schneidet. Dabei wird der Schleifstein 11 in einen Zwischenraum zwischen zwei in Umfangsrichtung benachbarten Häckselmessern 7 abschnittsweise eingeführt.

In einem nachfolgenden Schritt III wird in der zweiten Relativposition des Schleifsteins 11 der Schleifstein 11 wiederum um seine Drehachse rotatorisch angetrieben und über die Führung 9 in Axialrichtung A relativ zur Häckseltrommel 2 verlagert, wobei hierbei die Häckseltrommel 2 entgegengesetzt zur ersten Drehrichtung der Fig. 3a in einer zweite Drehrichtung derart gedreht wird, dass das zu bearbeitende Häckselmesser 7 mit seiner zweiten Seite 17 definiert gegen den Schleifstein 11 gedrückt wird. Diese Drehbewegung der Häckseltrommel 2 ist dabei vom Anstellwinkel der Häckselmesser 7 zur Axialrichtung A abhängig. Hierbei wird jedes Häckselmesser 7 an seiner zweiten Seite 17 unter Ausbildung der Freifläche 14 individuell bearbeitet. Schritte II und III werden für jedes Häckselmesser 7 separat ausgeführt.

Im Schritt III wird demnach die Häckseltrommel 2 mithilfe ihres Antriebs 5 auf eine je nach Messerart, Messerteilung und Durchmesser der Häckseltrommel 2 definierte Winkellage mit der zweiten Seite 17 gegen den Schleifstein 11 gedrückt. Um die Position der Häckselmesser 7 möglichst genau zu kennen, kann zusätzlich eine Vorrichtung zur Positionsbestimmung der Häckselmesser 7 genutzt werden, welche zum Beispiel optische Sensoren oder auch mechanische Abtastelemente aufweisen kann. Es ist möglich, die Anpresskraft des Rückens bzw. der zweiten Seite 17 des Häckselmesser 7 an den Schleifstein 11 über den Antrieb 5 der Häckseltrommel 2 einzustellen. Dann, wenn das jeweilige Häckselmesser 7 mit seiner zweiten äußeren Seite 17 an dem Schleifstein 11 anliegt, wird der Schleifstein 11 rotatorisch angetrieben und entlang der Führung 9 translatorisch bewegt, wobei bei dieser translatorischen Bewegung des Schleifsteins 11 entlang der Führung 9 die Häckseltrommel 2 abhängig vom Anstellwinkel der Häckselmesser 7 zur Axialrichtung A definiert verdreht wird, um die Freifläche 14 jeweils parallel zur jeweiligen Schneidkante 8 anzubringen. Wie bereits ausgeführt, wird dieses Schleifen der Häckselmesser 7 an ihren zweiten Seiten 17 zur Ausbildung der Freiflächen 14 für jedes Häckselmesser 7 einzeln durchgeführt.

Der Schleifschlitten 11 wird sowohl beim Schleifen der Schneidkanten 8 als auch beim Schleifen der Freiflächen 14 vorzugsweise mit einer gleichförmigen Vorschubgeschwindigkeit in Axialrichtung A entlang der Führung 9 bewegt.

Die jeweilige radiale Relativposition des Schleifsteins 11 kann variabel eingestellt werden - entsprechend der gewünschten Zustellung.

Alternativ zum zuvor beschriebenen Schleifen der Freifläche 14 bei an sich stillstehender Häckseltrommel 2, können die Freiflächen 14 alternativ bei sich drehender Häckseltrommel 2 angeschliffen werden. Dabei wird die Häckseltrommel 2 mit konstanter Drehzahl angetrieben und der rotierende Schleifstein 11 wird zyklisch in einer, an die Drehzahl der Häckseltrommel 2 sowie die Anzahl der Häckselmesser 7 angepassten, Frequenz von einer radial äußeren Relativposition in die radial innere bzw. zweite Relativposition verlagert. In der radial äußeren Relativposition kommt der Schleifstein 11 vorzugsweise nicht mit den Schneidkanten 8 der Häckselmesser 7 in Kontakt.

Dabei kann der Schleifstein 11 weggesteuert auf einem definiert vorgegebenen Weg in die radial innere bzw. zweite Relativposition abgesenkt und wieder angehoben werden, so dass der Schleifstein 11 so am Messerrücken vorbeigeführt wird, dass die gewünschte Freifläche entsteht. Die Wegsteuerung ist dazu eingerichtet, den Versatz der Schneidkanten 8 und der Freiflächen 14 auf Basis des Anstellwinkels der Häckselmesser 7 sowie anhand eines abnehmenden Radius der Häckseltrommel 2 auszugleichen.

Alternativ kann der sich drehende Schleifstein 11 mit einer vorbestimmten Kraft gegen die sich vorzugsweise rückwärts drehende Häckseltrommel 2 vorgespannt werden. Der rotierende Schleifstein 11 wird am Messerücken nach oben gepresst und während des "Hochlaufens" des Schleifsteins 11 am Messerücken entsteht die Freifläche 14.

Nach einer weiteren Alternative ist eine Sensoranordnung vorgesehen, welche der Schleifvorrichtung 3 Informationen über die Positionen der Schneidkanten 8 und vorzugsweise auch Informationen über den Zustand der Freiflächen 14 liefert. Auf der Basis der Positionsdaten der Schneidkanten 8 und ggf. der Information über den Zustand der jeweiligen Freifläche 14 kann ein vorzugsweise zusätzlich vorgesehener Aktor und/oder der zweite Aktor 20 den sich drehenden Schleifstein 11 von der radial äußeren Relativposition in die radial innere bzw. zweite Relativposition verlagern, wobei an der radial äußeren zweiten Seite 17 die Freifläche 14 angeschliffen wird. Mit der Information über die Position der nachfolgenden Schneidkante 8 der rotierenden Häckseltrommel 2 wird der Schleifstein 11 zur Verhinderung einer Kollision rechtzeitig wieder in die radial äußere Relativposition verlagert. Nach dem Passieren der nachfolgenden Schneidkante 8 wird der rotierende Schleifstein 11 wieder in die radial innere Relativposition verlagert, um auch an diesem Häckselmesser 7 eine Freifläche 14 anzuschleifen.

Bis die Freiflächen 14 an allen Häckselmessern 7 in der gewünschten Form angebracht sind, kann es erforderlich sein, die Häckseltrommel 2 für eine Vielzahl von Umdrehungen anzutreiben.

Das bereits erwähnte Steuergerät 22 ist auch zum Schleifen der Freiflächen 14 der Häckselmesser 7 nach den zuletzt genannten Alternativen eingerichtet. Dazu steuert das Steuergerät 22 den Antrieb 5 der Häckseltrommel 2 an, um diese mit einer konstanten Drehzahl anzutreiben sowie den zweiten Aktuator 20 zum rotatorischen Antreiben des Schleifsteins 11. Ferner steuert ferner das Steuergerät 22 den ersten Aktuator 19 zur Verlagerung des Schleifschlittens 10 entlang der gehäusefesten Führung 9 an. Darüber hinaus steuert das Steuergerät 22 den dritten Aktor 21 und/oder den ggf. zusätzlich vorgesehenen Aktor an, um den rotierenden Schleifstein 11 zyklisch von der radial äußeren Relativposition in die radial innere bzw. zweite Relativposition zu verlagern.

Das Steuergerät 22 kann den dritten Aktor 21 und/oder den ggf. zusätzlich vorgesehenen Aktor dabei weggesteuert, kraftgesteuert und/oder sensorgesteuert ansteuern.

Durch die Ausbildung der Freiflächen 14 an den Häckselmessern 7 wird die Facettenlänge L der Facettenfläche 18 begrenzt, wodurch im Betrieb eine Reibung für zu häckselndes Erntegut reduziert wird. Hierdurch kann die Verlustleistung an der Häckseltrommel 2 reduziert werden. Die Gefahr, dass Erntegut im Bereich der Häckselmesser 7 verklemmt und zu Verschleiß führt oder sich ggf. Stopfer ausbilden, kann reduziert werden.

Vorzugsweise weist die Schleifvorrichtung eine nicht gezeigte Kühleinrichtung auf, die eingerichtet ist, den rotierenden Schleifstein 11 beim Schleifen der Schneidkanten 8 und/oder beim Schleifen der Freiflächen 14 der Häckselmesser 7 über den Schleifstein 11 die Häckselmesser 7 zu kühlen.

Das Nachschärfen der Schneidkanten 8 - gemäß Schritt I - kann auch mit einem Schleifstein und Schleifverfahren nach dem Stand der Technik erfolgen.

### Bezugszeichenliste

- 1: Häckselwerk
- 2: Häckseltrommel
- 3: Schleifvorrichtung
- 4: Welle
- 5: Antrieb
- 6: Drehachse
- 7: Häckselmesser
- 8: Schneidkante
- 9: Führung
- 10: Schleifschlitten
- 11: Schleifstein
- 12: Schleifsteinbaugruppe
- 13: Drehachse
- 14: Freifläche
- 15: Gegenschneide
- 16: erste Seite - radial innere Seite
- 17: zweite Seite - radial äußere Seite
- 18: Facettenfläche
- 19: erster Aktuator
- 20: zweiter Aktuator
- 21: dritter Aktuator
- 22: Steuergerät

## Patentansprüche

1. Schleifvorrichtung (3) für Häckselmesser (7) eines Häckselwerks (1) einer landwirtschaftlichen Erntemaschine,
mit einem Schleifschlitten (10), der entlang einer gehäusefesten Führung (9) parallel zu einer Drehachse (6) einer die Häckselmesser (7) tragenden Häckseltrommel (2) des Häckselwerks (1), die an einem Gehäuse des Häckselwerks (1) drehbar gelagert ist, in Axialrichtung der Häckseltrommel (2) verlagerbar ist,
mit einer an dem Schleifschlitten (10) montierten, einen Schleifstein (11) aufweisenden Schleifsteinbaugruppe (12), die zusammen mit dem Schleifschlitten (10) parallel zu der Drehachse (6) der Häckseltrommel (2) in Axialrichtung derselben verlagerbar ist,
**dadurch gekennzeichnet, dass**
der Schleifstein (11) um eine Drehachse (13) des Schleifsteins (11), die sich vorzugsweise parallel zu der Drehachse (6) der Häckseltrommel (2) und damit in Axialrichtung der Häckseltrommel (2) erstreckt, rotatorisch antreibbar ist, und
in Radialrichtung der Häckseltrommel (2) derart an die Häckselmesser (7) anstellbar ist, dass in Drehrichtung der Häckseltrommel gesehen den Schneidkanten der Häckselmesser nachgeordnete Freiflächen anschleifbar sind, die sich radial nach innen erstrecken.

2. Schleifvorrichtung nach Anspruch 1, **dadurch gekennzeichnet, dass,** der Schleifstein (11) in Radialrichtung der Häckseltrommel (2) derart an die Häckseltrommel (2) anstellbar ist, dass an einer radial nach außen gerichteten ersten Seite (16) der Häckselmesser (7) Schneidkanten (8) schleifbar sind.

3. Schleifvorrichtung nach Anspruch 1 oder 2, **gekennzeichnet durch**
einen ersten Aktuator (19) zur translatorischen Verlagerung des Schleifschlittens (10) zusammen mit der Schleifsteinbaugruppe (12) entlang der gehäusefesten Führung (9) in Axialrichtung der Häckseltrommel (2), und
einen zweiten Aktuator (20) zum rotatorischen Antreiben des Schleifsteins (11) um seine Drehachse (13), und
einen dritten Aktuator (21) zum Anstellen des Schleifsteins (11) an die Häckselmesser (7) in Radialrichtung der Häckseltrommel (2).

4. Schleifvorrichtung nach Anspruch 3, **dadurch gekennzeichnet, dass** der zweite Aktuator (20) und der dritte Aktuator (21) zusammen mit dem Schleifschlitten (10) entlang der gehäusefesten Führung (9) verlagerbar sind.

5. Schleifvorrichtung nach einem der Ansprüche 3 oder 4, **gekennzeichnet durch** ein Steuergerät (22), welches eingerichtet ist,
zum Schleifen der Schneidkanten (8) an der ersten Seite (16) der Häckselmesser (7) den dritten Aktuator (21) zur Einstellung der ersten radialen Relativposition zwischen der Häckseltrommel (2) und dem Schleifstein (11) anzusteuern, den zweiten Aktuator (20) zum rotatorischen Antreiben des Schleifsteins (11) anzusteuern, den ersten Aktuator (19) zur Verlagerung des Schleifschlittens (10) entlang der gehäusefesten Führung (9) anzusteuern, und einen Antrieb (5) der Häckseltrommel (2) zum rotatorischen Antreiben der Häckseltrommel (2) in einer ersten Drehrichtung anzusteuern,
zum Schleifen der Freiflächen (14) an der zweiten Seite (17) der Häckselmesser (7) den dritten Aktuator (21) zur Einstellung der zweiten radialen Relativposition zwischen der Häckseltrommel (2) und dem Schleifstein (11) anzusteuern, den zweiten Aktuator (20) zum rotatorischen Antreiben des Schleifsteins (11) anzusteuern, den ersten Aktuator (19) zur Verlagerung des Schleifschlittens (10) entlang der gehäusefesten Führung (9) anzusteuern, und den Antrieb (5) der Häckseltrommel (2) in einer der ersten Drehrichtung entgegengesetzten zweiten Drehrichtung abhängig von einem Anstellwinkel der Häckselmesser (7) gegenüber der Axialrichtung der Häckseltrommel (2) derart anzusteuern, dass das jeweilige Häckselmesser (7) mit seiner zweiten Seite (17) gegen den Schleifstein (11) gedrückt wird.

6. Schleifvorrichtung nach einem der Ansprüche 3 oder 4, **gekennzeichnet durch** ein Steuergerät (22), welches zum Schleifen der Freiflächen (14) an der zweiten Seite (17) der Häckselmesser (7), dazu eingerichtet ist,
den Antrieb (5) der Häckseltrommel (2) anzusteuern, um diese mit einer konstanten Drehzahl anzutreiben,
den zweiten Aktuator (20) zum rotatorischen Antreiben des Schleifsteins (11) anzusteuern,
den ersten Aktuator (19) zur Verlagerung des Schleifschlittens (10) entlang der gehäusefesten Führung (9) anzusteuern und
den dritten Aktor (21) und/oder einen zusätzlich vorgesehenen Aktor anzusteuern, um den rotierenden Schleifstein (11) zyklisch von der radial äußeren Relativposition in die radial innere Relativposition zu verlagern.

7. Schleifvorrichtung nach einem der Ansprüche 1 bis 6, **dadurch gekennzeichnet, dass**
in der ersten radialen Relativposition zwischen der Häckseltrommel (2) und dem Schleifstein (11) eine Umfangsfläche des Schleifsteins (11) eine Einhüllende, auf welcher die Schneidkanten (8) liegen, tangential berührt,
in der zweiten radialen Relativposition zwischen der Häckseltrommel (2) und dem Schleifstein (11) die Umfangsfläche des Schleifsteins (11) die Einhüllende, auf welcher die Schneidkanten (8) liegen, schneidet.

8. Schleifvorrichtung nach einem der Ansprüche 1 bis 7, **gekennzeichnet durch** eine Kühleinrichtung, die eingerichtet ist, den rotierenden Schleifstein (11) beim Schleifen der Schneidkanten (8) und/oder beim Schleifen der Freiflächen (14) der Häckselmesser (7) über den Schleifstein (11) die Häckselmesser (7) zu kühlen.

9. Häckselwerk (1) einer landwirtschaftlichen Erntemaschine, insbesondere eines Feldhäckslers, mit einer, Häckselmesser (7) tragenden, Häckseltrommel (2), die an einem Gehäuse des Häckselwerks (1) drehbar gelagert ist, und mit einer Schleifvorrichtung (3) nach einem der Ansprüche 1 bis 8.

10. Verfahren zum Schleifen der Häckselmesser (7) eines Häckselwerks (1) mit einer Schleifvorrichtung nach einem der Ansprüche 1 bis 8,
zum Schleifen der an der ersten Seite (16) der Häckselmesser (7) ausgebildeten Schneidkanten (8) der Häckselmesser (7) die Häckseltrommel (2) in einer ersten Drehrichtung mit in dieser ersten Drehrichtung nach vorne zeigenden Schneidkanten (8) rotatorisch angetrieben wird, die erste radiale Relativposition zwischen der Häckseltrommel (2) und dem Schleifstein (11) eingestellt wird, der Schleifstein (11) rotatorisch angetrieben wird, und der Schleifstein (11) zusammen mit dem Schleifschlitten (10) entlang der gehäusefesten Führung in Axialrichtung der rotierenden Häckseltrommel (2) verlagert wird,
zum Schleifen der an der zweiten Seite (17) der Häckselmesser (7) auszubildenden oder ausgebildeten Freiflächen (14) der Häckselmesser (7) die zweite radiale Relativposition zwischen der Häckseltrommel (2) und dem Schleifstein (11) eingestellt wird, der Schleifstein (11) rotatorisch angetrieben wird und zusammen mit dem Schleifschlitten (10) entlang der gehäusefesten Führung (9) in Axialrichtung der der Häckseltrommel (2) verlagert wird, wobei hierbei die Häckseltrommel (2) abhängig von einem Anstellwinkel der Häckselmesser (7) gegenüber der Axialrichtung der Häckseltrommel (2) in einer zur ersten Drehrichtung entgegengesetzten zweiten Drehrichtung verdreht wird, derart, dass das jeweilige Häckselmesser (7) mit seiner zweiten Seite (17) gegen den Schleifstein (11) gedrückt wird.

11. Verfahren nach Anspruch 10, **dadurch gekennzeichnet, dass** die jeweilige Freifläche (14) an dem jeweiligen Häckselmesser (7) derart ausgebildet wird, dass eine die Schneidkante (8) aufweisende Facettenfläche (18) des jeweiligen Häckselmessers (7) eine definierte Höhe oder Länge aufweist und die jeweilige sich an die Facettenfläche (18) anschließende Freifläche (14) relativ zur jeweiligen Facettenfläche (18) mit einem definierten Freiflächenwinkel nach radial innen in die Häckseltrommel (2) hinein geneigt ist.

12. Verfahren nach Anspruch 11, **dadurch gekennzeichnet, dass** der definierte Freiflächenwinkel zwischen 6° und 10° beträgt.
